# FASCICULE DE BREVET EUROPEEN

(11) **EP 1 935 556 B1**
(45) Date de publication et mention de la délivrance du brevet: **17.02.2010**
(21) Numéro de dépôt: 07123213.6
(22) Date de dépôt: 14.12.2007
(51) Int. Cl.: B23Q 3/02, B23Q 7/14, B25J 15/00, B25B 5/00

(54) **Dispositif de fixation rapide d'un ensemble mécanique sur un support**
Schnellfixiervorrichtung für eine mechanische Anordnung auf einer Halterung
Device for quick attachment of a mechanical assembly on a support

(30) Priorité: 15.12.2006 FR 0610963
(43) Date de publication de la demande: 25.06.2008
(73) Titulaire: THALES, 92200 Neuilly sur Seine (FR)
(72) Inventeur: Bibes, Xavier, 33600 Pessac (FR)
(74) Mandataire: Lucas, Laurent Jacques

(56) Documents cités:
- EP-A- 1 321 221
- EP-A1- 0 827 806
- DE-C1- 4 135 490

## Description

La présente invention concerne un dispositif de fixation rapide d'un ensemble mécanique sur un support. Elle concerne notamment la fixation d'un outillage sur un support par exemple vibratoire, notamment pour un poste d'essai ou de test.

Pour fixer des outillages notamment, les modes de fixation classiques utilisent des vis nécessitant un temps d'intervention important, dans des conditions d'accessibilité longue, pénible et difficile. En effet, il est généralement nécessaire de sortir l'équipement de son support, de se pencher, voire de rentrer dans l'équipement, pour dévisser de nombreuses vis, peu accessibles entre les montants tenant les équipements. Les conditions peuvent encore être compliquées lorsque les équipements sont par exemple des machines vibrantes ou lorsqu'il y a des équipements complémentaires tels que des circuits de ventilation ou de refroidissement notamment.
Une demande de brevet EP 1321221 décrit un dispositif de serrage d'un support et d'un porte-pièce qui peut être fixé de façon amovible.

Un but de l'invention est notamment de pallier les inconvénients précités en supprimant la fixation par vis. A cet effet, l'invention a pour objet un dispositif de fixation d'un ensemble mécanique sur un support tel que défini par la revendication 1.

La pièce femelle comporte par exemple une paroi latérale ayant une forme intérieure conique, la pièce mâle ayant alors une partie de forme conique se bloquant dans la paroi intérieure conique sous l'effet de la poussée du système.

Avantageusement, le système de poussée peut être un vérin, par exemple bidirectionnel.
Le dispositif comporte par exemple un circuit d'alimentation en pression du vérin d'un module de fixation.
Le support est par exemple une table vibrante. L'ensemble mécanique est par exemple un outillage.

D'autres caractéristiques et avantages de l'invention apparaîtront à l'aide de la description qui suit faite en regard de dessins annexés qui représentent :
- la figure 1, une illustration par une vue d'ensemble simplifiée d'un outillage fixé sur un support par un dispositif selon l'invention ;
- la figure 2, un exemple de réalisation d'un module de fixation, élément constitutif d'un dispositif selon l'invention.

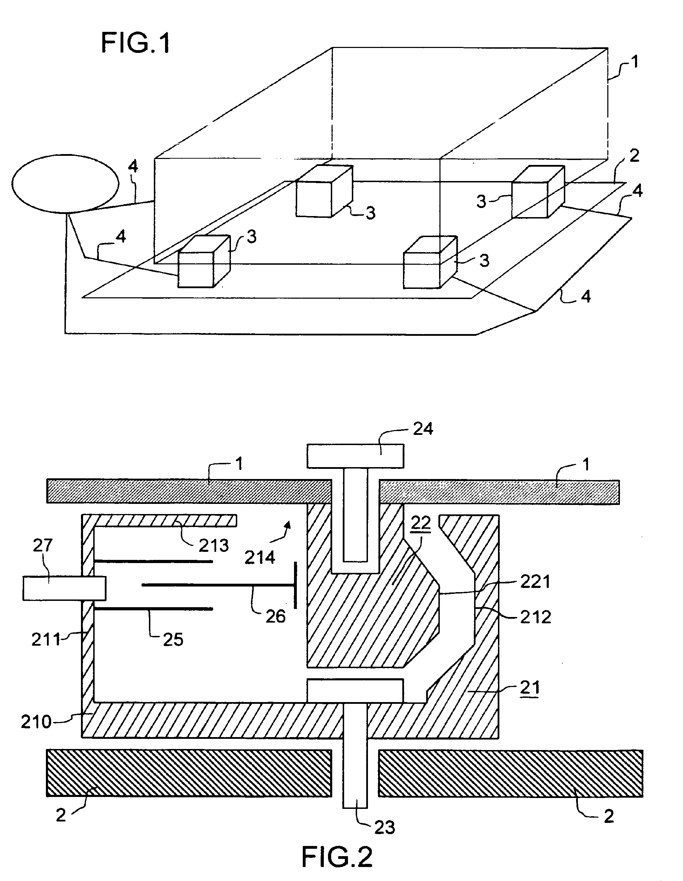

La figure 1 représente, par une vue d'ensemble, un outillage 1 fixé à un support 2 par un dispositif selon l'invention 3, 4. Le dispositif selon l'invention comporte un ensemble de modules de fixation 3 reliées par exemple à un circuit d'alimentation 4, sous pression pneumatique ou hydraulique par exemple.

La figure 2 représente, par une vue schématique, un exemple de réalisation d'un module de fixation 3.
Le module de fixation comporte une pièce femelle 21 et une pièce mâle 22. Cette pièce femelle 21 est fixée sur le support 2. Cette pièce 21 est, par exemple, fixée sur le support 2 à l'aide d'une vis 23.
La pièce mâle est fixée sur l'outillage lui-même, par exemple, au moyen d'une vis de fixation 24. Les pièces mâle 22 et femelle 21 peuvent s'emboîter l'une dans l'autre sans jeux.
La pièce femelle 21 comporte, par exemple, un socle 210 en contact avec le support 2, ayant par exemple au moins un trou pour permettre le passage de la vis de fixation 23, et des parois latérales 211, 212, et éventuellement une paroi supérieure 213, formant ainsi une boîte. Une ouverture 214 est prévue pour laisser passer la pièce mâle 22. Dans l'exemple de la figure 2, la pièce mâle comporte une paroi latérale 212 ayant une forme intérieure conique.

Cette forme intérieure conique est destinée à accueillir une partie 221 de la pièce mâle 22 ayant une forme saillante conique.
La pièce femelle 21 comporte par ailleurs un vérin 25, 26, fixé, par exemple, sur la paroi latérale 211 opposée à la paroi latérale 212 ayant une forme intérieure conique. Une fois la pièce mâle 22 incluse à l'intérieur de la pièce femelle 21, le piston 26 du vérin pousse la pièce mâle 22 de sorte que sa partie conique se plaque contre la paroi intérieure conque 212, achevant la fixation de la pièce mâle dans ia pièce femelle, et donc ia fixation de l'outillage 1 sur le support 2. Cette fixation est achevée par la mise sous pression du vérin 25, 26 par le circuit d'alimentation 4. Le vérin peut être notamment pneumatique ou hydraulique. A cet effet, un raccord 27 relie le vérin au circuit d'alimentation 4.
Un dispositif de fixation selon l'invention comporte autant de modules de fixation 3 que nécessite la dimension de l'outillage. Une fois les pièces mâles emboîtées dans les pièces femelles, la fixation est achevée par l'activation des vérins 25, 26 disposés à l'intérieur des pièces femelles 21. Si les vérins sont de type pneumatique, ils peuvent être alimentés par un circuit d'air comprimé 4, généralement disponible dans les usines.
Le support 2 peut être une table vibrante selon les équipements que l'on teste par exemple.

Comme le montrent les figures 1 et 2, l'invention permet la fixation d'outillages en supprimant les fixations classiques par vis, qui nécessitent un temps d'intervention important, dans des conditions d'accessibilité longue, pénible et difficile, puisqu'il peut être impératif notamment de sortir certains équipements de leur support, de se pencher, voire de rentrer dans la machine vibrante, pour dévisser de nombreuses vis, peu accessibles entre les montants tenant les équipements et les buses de ventilation.

L'invention permet avantageusement de fixer, sans jeu, en quelques secondes, dans un environnement très contraignant en vibration et en température, tout type d'outillages. Il peut se monter sur les outillages existants, par l'ajout d'une ou plusieurs pièces mâles 22 ayant une contre forme intérieure conique 221, montée par exemple à demeure sur l'outillage, en lieu et place de chacune des anciennes vis de fixation.

Coté support 2 ou table vibrante, la pièce femelle 21 inclut par exemple le vérin 25, 26 alimenté, par exemple, par l'air comprimé du réseau usine s'il est pneumatique. La pièce femelle 21 est isolée thermiquement pour réduire l'impact des chocs thermique sur la fiabilité et l'efficacité du vérin, dont les performances de pression sont choisies en fonction de la masse volumique maximale des équipements, des dimensions entre les anciennes vis de fixation, du niveau de vibration à transmettre entre la table et l'outillage 1, ainsi que des ambiantes extrêmes de température.
Les formes et contre formes coniques 212, 221 sont choisies pour permettre un blocage multidirectionnel, et supporter ainsi des vibrations et effort dans tous les sens, sans jeux, et sans absorption des vibrations et efforts à transmettre.
La précharge demandée aux vérins tient compte des efforts maximum rencontrés, afin qu'il n'y ait jamais de décollement entre forme et contre forme 212, 221 lors d'essais.
L'angle du cône est également choisi afin d'éviter les coincements entre forme et contre forme lors du démontage.
Le vérin est par exemple choisi bidirectionnel afin de retirer facilement le cône de la contre forme lors du démontage de l'ensemble outillage et équipement, sans intervention de l'opérateur dans la chambre.
L'invention possède des variantes de réalisation, telles que :
- Tout type de forme et contre forme conique peut être remplacé par des formes pyramidales, à base de pans coupés, de picots, ou cames notamment, pourvu qu'elles soient judicieusement choisies.
- Des systèmes à bases de sauterelles, de pompe à vide ou de ballon métallique gonflable, par exemple, peuvent permettre de remplacer les vérins 25, 26 si l'air comprimé n'est pas facilement accessible notamment. Les sauterelles sont toutefois moins avantageuses car l'intervention de l'opérateur est plus longue qu'avec des vérins. Les pompes à vides peuvent rejeter l'azote hors de la chambre, les ballons métalliques gonflables sont plus difficiles à dimensionner et ont un taux de fuite plus important.

L'invention possède de très nombreux avantages. Elle permet la création d'un standard de fixation rapide (remplacement d'une vis par un système), l'utilisation d'interfaces préexistantes, de techniques de pré-positionnement rapides, de fixation rapide, d'utilisation d'air comprimé usine, de transmission des vibrations sans amortissement et sans jeux de montage (très dommageables en environnement de vibrations). Les avantages de l'invention sont encore dans la possibilité d'un changement d'outillage en moins d'une minute, d'une résistance aux contraintes environnementales sévères (en vibration et climatique), d'une reconfiguration ultrarapide de la chaîne de production, d'un coût d'entretien et de maintenance nul ou très faible. L'invention peut, en outre, s'adapter à tous types de poste de tests et d'essais nécessitant de fréquents changements d'interface mécanique comme des pots vibrants par exemple.
Le coût de réalisation des pièces constitutives d'un dispositif selon l'invention est faible. Par ailleurs, ces pièces sont jetables, et ne demandent pas d'entretien. Elles sont renouvelables au même titre que la visserie.

## Revendications

1. Dispositif de fixation d'un ensemble mécanique (1) sur un support (2) comprenant au moins un module de fixation (3) comportant une pièce mâle (22) solidaire mécaniquement de l'ensemble (1) et une pièce femelle (21) solidaire mécaniquement du support (2), la pièce mâle (22) s'emboîtant dans la pièce femelle (21), la pièce femelle comportant un systeme de poussee (25, 26) bloquant la pièce mâle (22) contre une paroi de la pièce femelle (21) une fois la pièce mâle emboîtée, **caractérisé en ce que** la pièce mâle (22) comporte une partie saillante (221) et la pièce femelle comporte une paroi latérale (212) adaptée pour être pénétrée par la partie saillante (221), le système de poussée étant placé sur la paroi latérale (211) de la pièce femelle opposée à la paroi latérale (212) adaptée, la partie saillante (221) se bloquant dans la paroi latérale adaptée sous l'effet de la poussée du système (25, 26).

2. Dispositif selon la revendication 1, **caractérisé en ce que** la paroi latérale (211) de la pièce femelle (21) a une forme intérieure conique et la partie saillante (221) de la pièce mâle (22) est de forme conique se bloquant dans la paroi intérieure conique sous l'effet de la poussée du système (25, 26).

3. Dispositif selon l'une quelconque des revendications précédentes, **caractérisé en ce que** le système de poussée est un vérin.

4. Dispositif selon la revendication 3, **caractérisé en ce que** le vérin est bidirectionnel.

5. Dispositif selon l'une quelconque des revendications 3 ou 4, **caractérisé en ce qu'**il comporte un circuit d'alimentation en pression (4) du vérin d'un module.

6. Dispositif selon l'une quelconque des revendications 3 à 5, **caractérisé en ce que** le vérin (25, 26) est disposé sur la paroi (211) opposée à la paroi intérieure conique (212).

7. Dispositif selon l'une quelconque des revendications 3 à 6, **caractérisé en ce que** le vérin (25, 26) est pneumatique.

8. Dispositif selon l'une quelconque des revendications précédentes, **caractérisé en ce que** la pièce femelle (21) est fixée sur le support (2) au moyen d'une vis (23).

9. Dispositif selon l'une quelconque des revendications précédentes, **caractérisé en ce que** la pièce mâle (22) est fixée à l'ensemble mécanique (1) au moyen d'une vis (24).

10. Dispositif selon l'une quelconque des revendications précédentes, **caractérisé en ce que** la pièce femelle (21) comporte une paroi supérieure (213) ayant une ouverture (214) laissant passer la pièce mâle (22).

11. Dispositif selon l'une quelconque des revendications précédentes, **caractérisé en ce que** le support (2) est une table vibrante.

12. Dispositif selon l'une quelconque des revendications précédentes, **caractérisé en ce que** l'ensemble mécanique (1) est un outillage.

## Claims

1. Device for mounting a mechanical assembly (1) on a support (2), the device comprising at least one mounting module (3) having a male part (22) mechanically fixed to the assembly (1) and a female part (21) mechanically fixed to the support (2), the male part (22) fitting into the female part (21), the female part having a thrust system (25, 26) locking the male part (22) against a wall of the female part (21) once the male part has been fitted thereinto, **characterized in that** the male part (22) has a projecting portion (221) and the female part comprises a side wall (212) suitable for being penetrated by the projecting portion (221), the thrust system being placed on the side wall (211) of the female part opposite the suitable side wall (212), the projecting portion (221) being locked into the modified side wall under the effect of the thrust of the system (25, 26).

2. Device according to Claim 1, **characterized in that** the side wall (211) of the female part (21) has a conical internal form, and the projecting portion (221) of the male part (22) has a conical form and locks into the conical internal wall under the effect of the thrust of the system (25, 26).

3. Device according to either of the preceding claims, **characterized in that** the thrust system is a cylinder.

4. Device according to Claim 3, **characterized in that** the cylinder is double-acting.

5. Device according to either of Claims 3 and 4, **characterized in that** it has a circuit (4) for pressurizing the cylinder of a module.

6. Device according to any of Claims 3 to 5, **characterized in that** the cylinder (25, 26) is provided on the wall (211) opposite the conical internal wall (212).

7. Device according to any of Claims 3 to 6, **characterized in that** the cylinder (25, 26) is pneumatic.

8. Device according to any of the preceding claims, **characterized in that** the female part (21) is mounted on the support (2) by means of a screw (23).

9. Device according to any of the preceding claims, **characterized in that** the male part (22) is mounted on the mechanical assembly (1) by means of a screw (24).

10. Device according to any of the preceding claims, **characterized in that** the female part (21) has an upper wall (213) having an opening (214) for the male part (22) to pass through.

11. Device according to any of the preceding claims, **characterized in that** the support (2) is a vibrating table.

12. Device according to any of the preceding claims, **characterized in that** the mechanical assembly (1) is a tool.

## Patentansprüche

1. Vorrichtung zur Befestigung einer mechanischen Einheit (1) auf einem Träger (2), die mindestens ein Befestigungsmodul (3) enthält, das ein mechanisch fest mit der Einheit (1) verbundenes Einsteckbauteil (22) und ein mechanisch fest mit dem Träger (2) verbundenes Aufnahmebauteil (21) aufweist, wobei das Einsteckbauteil (22) in das Aufnahmebauteil (21) eingefügt wird, wobei das Aufnahmebauteil ein Schubsystem (25, 26) aufweist, das das Einsteckbauteil (22) gegen eine Wand des Aufnahmebauteils (21) blockiert, wenn das Einsteckbauteil eingefügt ist, **dadurch gekennzeichnet, dass** das Einsteckbauteil (22) einen vorstehenden Teil (221) und das Aufnahmebauteil eine Seitenwand (212) aufweist, die angepasst ist, damit der vorstehende Teil (221) in sie eindringt, wobei das Schubsystem auf der Seitenwand (211) des Aufnahmebauteils entgegengesetzt zur angepassten Seitenwand (212) angeordnet ist, wobei der vorstehende Teil (221) sich in der angepassten Seitenwand unter der Wirkung des Schubs des Systems (25, 26) blockiert.

2. Vorrichtung nach Anspruch 1, **dadurch gekennzeichnet, dass** die Seitenwand (211) des Aufnahmebauteils (21) eine kegelige Innenform hat und der vorstehende Teil (221) des Einsteckbauteils (22) eine kegelige Form hat, die sich unter der Wirkung des Schubs des Systems (25, 26) in der kegeligen Innenwand blockiert.

3. Vorrichtung nach einem der vorhergehenden Ansprüche, **dadurch gekennzeichnet, dass** das Schubsystem ein Arbeitszylinder ist.

4. Vorrichtung nach Anspruch 3, **dadurch gekennzeichnet, dass** der Arbeitszylinder bidirektional ist.

5. Vorrichtung nach einem der Ansprüche 3 oder 4, **dadurch gekennzeichnet, dass** sie eine Druckversorgungsschaltung (4) des Arbeitszylinders eines Moduls aufweist.

6. Vorrichtung nach einem der Ansprüche 3 bis 5, **dadurch gekennzeichnet, dass** der Arbeitszylinder (25, 26) auf der der kegeligen Innenwand (212) entgegengesetzten Wand (211) angeordnet ist.

7. Vorrichtung nach einem der Ansprüche 3 bis 6, **dadurch gekennzeichnet, dass** der Arbeitszylinder (25, 26) pneumatisch ist.

8. Vorrichtung nach einem der vorhergehenden Ansprüche, **dadurch gekennzeichnet, dass** das Aufnahmebauteil (21) auf dem Träger (2) mittels einer Schraube (23) befestigt ist.

9. Vorrichtung nach einem der vorhergehenden Ansprüche, **dadurch gekennzeichnet, dass** das Einsteckbauteil (22) an der mechanischen Einheit (1) mittels einer Schraube (24) befestigt ist.

10. Vorrichtung nach einem der vorhergehenden Ansprüche, **dadurch gekennzeichnet, dass** das Aufnahmebauteil (21) eine obere Wand (213) aufweist, die eine Öffnung (214) hat, welche das Einsteckbauteil (22) durchlässt.

11. Vorrichtung nach einem der vorhergehenden Ansprüche, **dadurch gekennzeichnet, dass** der Träger (2) ein Rütteltisch ist.

12. Vorrichtung nach einem der vorhergehenden Ansprüche, **dadurch gekennzeichnet, dass** die mechanische Einheit (1) ein Handwerkzeug ist.
